# EUROPEAN PATENT APPLICATION

(11) **EP 4 653 317 A1**
(43) Date of publication of application: **26.11.2025**
(21) Application number: 24177503.0
(22) Date of filing: 22.05.2024
(51) Int. Cl.: B64D 11/00

(54) **ELECTRICAL INTEGRATION CONCEPT**

(71) Applicant: AIRBUS Operations GmbH, 21129 Hamburg (DE)
(72) Inventor: Voss, Jens, Hamburg (DE); Roth, Franziska, Hamburg (DE)

(57) **Abstract**

A modular passenger service unit (10) for an aircraft (100) is provided, comprising:
a unit stationary connector (12); and a unit flexible connector (14), comprising a flexible length for adaptable installation of the modular passenger service unit (10), wherein the unit stationary connector (12) and the unit flexible connector (14) are configured to be connectable to an associated passenger supply channel portion (16) of a lining module (18), preferably an overhead stowage compartment (OHSC), via an associated lining stationary connector (20) and a lining flexible connector (22) comprising a flexible length, wherein the modular passenger service unit (12) is configured to facilitate a daisy chain integration in a wiring scheme of the aircraft in which multiple modular passenger service units (10) are wired together in sequence.

## Description

### Technical Field

The present invention relates to a modular passenger service unit for an aircraft, a wiring system for an aircraft, comprising a modular passenger service unit and an aircraft comprising said wiring system.

### Background

In the field of aircraft interior design, the current approach to wiring overhead stowage compartments (OHSC) involves individual connections between passenger supply channel (PSC) components and their corresponding aircraft interfaces. This conventional method may result in significant work and time efforts during installation due to the need for meticulous wiring of each component. Furthermore, the specificity of the PSC for each type of aircraft, known as Head of Version (HoV), may pose challenges in standardization. With the absence of a universal wiring solution, customization efforts are intensified, and may lead to increased complexity, weight, and costs.

The individual connection of PSC components to aircraft interfaces may demand extensive labor and time resources, which may contribute to inefficiencies in the assembly process. Further, the lack of a standardized solution for OHSC modules may complicate production planning and may increase the lead time for aircraft manufacturing. Moreover, the absence of standardized wiring may limit the scalability and adaptability of aircraft interiors, hindering efforts to streamline production and reduce overall costs.

In summary, the known prior art in OHSC wiring may entail labor-intensive and time-consuming installation processes, exacerbated by the absence of a standardized solution. This may result in increased complexity, lead time, and costs in aircraft manufacturing. Addressing these challenges is crucial for enhancing efficiency, standardization, and cost-effectiveness in aircraft interior design and production.

### Summary of the invention

The object of the invention is to reduce the complexity of a wiring system. This object is solved with the subject matter of the independent claims. Further embodiments can be found in the dependent claims.

According to the invention a modular passenger service unit for an aircraft comprises a unit stationary connector; and a unit flexible connector, comprising a flexible length for adaptable installation of the modular passenger service unit. The unit stationary connector and the unit flexible connector are each configured to be connectable to an associated passenger supply channel portion of a lining module via an associated lining stationary connector and a lining flexible connector comprising a flexible length. The modular passenger service unit is configured to facilitate a daisy chain integration in a wiring scheme of the aircraft in which multiple modular passenger service units are wired together in sequence.

A modular passenger service unit for an aircraft is a component configured to provide various passenger services and amenities within the aircraft cabin. It typically includes features such as lighting controls, air vents, call buttons, and entertainment system interfaces. The "modular" aspect refers to its ability to be easily integrated and reconfigured within the aircraft cabin layout, allowing for flexibility in design and customization to meet the specific needs of different aircraft configurations or airline preferences. This modularity enables efficient installation, maintenance, and replacement of components, contributing to streamlined aircraft operations and enhanced passenger experience.

The "unit stationary connector" refers to a specific type of connector configured to provide a secure and permanent connection within the modular passenger service unit or related aircraft systems. This connector is typically affixed to the passenger service unit or its associated components in a fixed position, ensuring stable and reliable electrical or mechanical connections. The unit stationary connector plays a critical role in the overall functionality and integrity of the modular passenger service unit, facilitating the transmission of power, data, or other signals essential for the operation of various onboard systems and amenities.

The "unit flexible connector" serves as a pivotal component within the modular passenger service unit setup, ensuring adaptable and seamless integration within the aircraft cabin. Unlike its fixed counterpart, this connector offers flexibility during installation and connection processes. It possesses a flexible design, enabling it to conform to varying configurations within the cabin layout. This flexibility allows for versatile installation options, catering to different aircraft designs and requirements configured to interface with the associated passenger supply channel portion of a lining module, such as an overhead stowage compartment (OHSC) or other cabin amenities. This connector plays a crucial role in establishing electrical connections between the modular passenger service unit and the cabin infrastructure. Its flexible nature facilitates easy maneuvering and positioning during installation, ensuring optimal placement for efficient operation and passenger convenience. Capable of accommodating different cabin layouts and configurations, the flexible connector enhances the adaptability of the modular passenger service unit within the aircraft environment. It enables the modular passenger service unit to be installed in various positions to meet specific operational needs and passenger preferences. Despite its flexible design, the flexible connector is configured to provide a secure and dependable connection, ensuring uninterrupted functionality of the modular passenger service unit and associated cabin amenities.

Overall, the unit flexible connector embodies the core principles of flexibility, adaptability, and reliability, essential for the successful integration of modular passenger service units within the aircraft cabin.

In the state of the art, modular passenger service units only had one input connector. However, with this new approach, each modular passenger service unit now features both a stationary connector, which remains securely attached, and a flexible connector, providing adaptability during installation. This dual connector setup ensures that the electrical circuit is properly completed, enhancing the reliability of the modular passenger service unit connections.

Furthermore, by routing the modular passenger service unit cables onto a metallic passenger supply channel rail, the system enables the connection of sensitive data lines. These data lines are essential for supporting high-quality screens and cameras within the aircraft cabin. The use of the metallic rail allows for the necessary ground shield to be connected, ensuring optimal signal transmission and minimizing interference. Additionally, the rail itself is bonded to the aircraft structure, providing a stable and reliable electrical connection throughout the cabin.

The term "daisy chain" refers to a wiring configuration where each unit is connected to the next in a linear sequence, forming a chain-like structure. This allows for a streamlined and efficient wiring scheme, as the units are linked together using a single continuous cable or wire, rather than requiring individual connections to a central point.

By facilitating daisy chain integration, the modular passenger service unit simplifies the wiring process and reduces the complexity of the aircraft's electrical system. This integration method also offers flexibility in the arrangement of the units within the cabin, as they can be easily added, removed, or repositioned without disrupting the overall wiring layout. Specifically, each modular passenger service unit is connected to the next unit in the sequence, forming a continuous chain of connections. This means that the output of one unit serves as the input for the next unit, creating a streamlined and efficient wiring scheme.

By employing a daisy chain integration method, the wiring process is simplified and reduces the complexity of the aircraft's electrical system. It allows for a standardized and consistent wiring configuration throughout the cabin, enhancing installation efficiency, reducing maintenance efforts, and improving overall reliability.

Overall, the ability of the modular passenger service unit to support daisy chain integration enhances the efficiency, flexibility, and scalability of the aircraft's wiring scheme, contributing to simplified installation, reduced maintenance efforts, and improved overall performance.

During the installation process, the wires are carefully detached from the lining module, configured as a passenger supply channel (PSC) rail to the necessary extent, ensuring they can reach and connect to the modular passenger service unit. Any excess cable length is then neatly rolled up and secured onto the PSC rail, maintaining a tidy and organized wiring layout within the aircraft cabin.

The flexible connector of the lining module is connected to the stationary connector of the modular passenger service unit, establishing the electrical link between the lining module and the modular passenger service unit. Simultaneously, the flexible connector of the modular passenger service unit is connected to the stationary connector of the lining module, completing the circuit and enabling the modular passenger service unit to provide power and data connectivity to the lining module.

For oxygen distribution within the cabin, the loose oxygen connector is connected to the modular passenger service unit, which features a dedicated stationary connector for connection to the aircraft's oxygen container. This ensures reliable and efficient distribution of supplemental oxygen to passengers and crew in emergency situations.

To enhance redundancy and reliability in the electrical system, a redundancy logic is implemented using an A/B alternating system, managed by a distributing system on the modular passenger service unit. This logic ensures continuous operation by alternating between two separate paths (A and B) for power and data transmission.

Special lining module configurations that lack a separate A/C connector may still be accommodated within the wiring system. These configurations are connected over the previous lining module, utilizing the existing wiring infrastructure and eliminating any unnecessary connectors.

Overall, these installation procedures ensure efficient, standardized, and reliable wiring of the modular passenger service units, enhancing the functionality, flexibility, and cost-effectiveness of the aircraft cabin wiring system.

According to an embodiment the unit stationary connector, the unit flexible connector, the lining stationary connector and the lining flexible connector each comprise a corresponding click-and-snap connection mechanism.

The "click-and-snap connection mechanism" is a type of fastening system used in connectors to secure two components together quickly and securely. In this mechanism, one component typically features a protruding element (such as a tab or button) while the other component has a corresponding receptacle or groove. When the components are brought together, the protruding element is inserted into the receptacle, and a snapping action occurs, audibly indicating that the connection is secure.

One advantage of the click-and-snap connection mechanism is its ease of use and reliability. The audible click provides feedback to the user, confirming that the connection has been properly made. This simplicity makes it user-friendly and reduces the likelihood of installation errors. Additionally, the secure locking mechanism ensures that the connection remains stable, even in dynamic or high-vibration environments, enhancing the overall robustness and reliability of the connector system.

According to an embodiment the click-and-snap connection mechanisms are metallic to provide a shielding.

The metallic nature of the click-and-snap connection mechanisms serves to provide shielding capabilities. By using metal components, the connectors can effectively shield against electromagnetic interference (EMI) and radio frequency interference (RFI), which are common in aircraft environments.

The use of metallic click-and-snap connection mechanisms offers enhanced protection against EMI and RFI, ensuring the integrity of electrical signals and data transmission within the aircraft's wiring system. This shielding capability helps to maintain signal quality, reduce the risk of signal degradation or interference, and enhance overall system performance and reliability. Additionally, the robustness of metal components contributes to the durability and longevity of the connectors, making them suitable for demanding aerospace applications.

According to an embodiment the modular passenger service unit for an aircraft further comprises oxygen distributor pins.

Oxygen distributor pins are components configured to facilitate the distribution of oxygen within the aircraft cabin in case of an emergency. These pins are typically integrated into the modular passenger service unit and are strategically positioned to provide quick and easy access to supplemental oxygen for passengers and crew.

The inclusion of oxygen distributor pins in the modular passenger service unit enhances safety measures within the aircraft cabin. In the event of depressurization or other emergencies requiring oxygen supplementation, passengers and crew can quickly access the necessary oxygen supply, potentially mitigating the risks associated with hypoxia or other respiratory issues. Additionally, by integrating oxygen distributor pins into the modular passenger service unit, the overall design of the aircraft cabin is streamlined, optimizing space utilization and minimizing clutter.

According to an embodiment the modular passenger service unit for an aircraft further comprises a loose oxygen connector comprising a flexible length.

A loose oxygen connector with a flexible length is a component configured to provide a connection point for oxygen distribution within the aircraft cabin. Unlike rigid connectors, the flexible length allows for easier installation and adaptability to varying cabin configurations.

The inclusion of a loose oxygen connector with a flexible length enhances the versatility and ease of installation of the modular passenger service unit. It allows for greater flexibility in routing oxygen lines within the cabin, accommodating different layouts and configurations while ensuring optimal oxygen distribution to passengers and crew.

According to an embodiment the modular passenger service unit for an aircraft further comprises a control board, wherein the control board is configured to control the modular passenger service unit.

The control board serves as the central processing unit for the modular passenger service unit, coordinating and regulating its functionalities such as lighting controls, air vents, call buttons, and entertainment system interfaces. It receives input from sensors or user interfaces and executes predefined commands or algorithms to adjust the unit's settings accordingly.

The inclusion of a control board enhances the functionality and automation capabilities of the modular passenger service unit. By centralizing control functions, the unit becomes more efficient, user-friendly, and adaptable to different operational requirements. The control board enables precise control and coordination of various onboard systems, leading to improved passenger experience, streamlined cabin operations, and enhanced safety and comfort during flight.

According to an embodiment the modular passenger service unit for an aircraft further comprises loudspeakers and/or lights.

Loudspeakers and lights may be additional features integrated into the modular passenger service unit to enhance passenger comfort and convenience within the aircraft cabin. The loudspeakers may be used for broadcasting announcements, playing music, or providing in-flight entertainment, while the lights serve to illuminate the cabin and create a comfortable ambiance for passengers.

The inclusion of loudspeakers and lights in the modular passenger service unit enhances the overall passenger experience during flight. The loudspeakers allow for clear and audible communication of important announcements or entertainment options, improving communication between passengers and crew. Additionally, the lights may provide adequate illumination within the cabin, enhancing visibility and creating a pleasant atmosphere for passengers to relax or work during the flight. Overall, these features contribute to a more enjoyable and comfortable travel experience for passengers.

According to an embodiment the modular passenger service unit for an aircraft further comprises in-flight entertainment systems, including screens for with and without in-flight entertainment (IFE) content.

These IFE systems are integrated into the modular passenger service unit to provide passengers with access to a variety of entertainment options during their flight. The screens may be used to display movies, TV shows, games, flight information, or other multimedia content, enhancing the overall passenger experience and providing a source of entertainment and relaxation during the flight.

The addition of screens to the modular passenger service unit introduces an expanded array of content options for passengers to enjoy during their flight. The PSU content may be enhanced with features such as Moving Maps, safety videos, displaying available restrooms, and potentially showcasing advertisements and other passenger information within the framework of PSU content.

According to an embodiment the modular passenger service unit for an aircraft further comprises a passenger call button, configured to allow a passenger to communicate with a flight attendant.

The passenger call button serves as a convenient and accessible means for passengers to request assistance, make inquiries, or communicate with the flight attendants during the flight. When pressed, the call button notifies the flight crew of the passenger's request, allowing them to respond promptly and attend to the passenger's needs.

The inclusion of a passenger call button in the modular passenger service unit enhances the overall passenger experience by providing a direct and efficient means of communication with the flight crew. Passengers can easily request assistance or report any issues they may encounter during the flight, ensuring that their needs are promptly addressed by the flight attendants. This contributes to improved customer service, passenger satisfaction, and overall comfort and safety during the flight.

According to an embodiment the modular passenger service unit further comprises a sign.

The sign integrated into the modular passenger service unit serves as a visual indicator or display to convey important information or messages to passengers. It can be used for various purposes such as displaying safety instructions, directional signage, advertising, or any other relevant information pertaining to the aircraft or cabin.

The inclusion of a sign in the modular passenger service unit enhances communication and information dissemination within the aircraft cabin. Passengers can easily reference the sign for important instructions or guidance, improving overall safety and awareness during the flight. Additionally, the sign can be used for promotional or advertising purposes, generating additional revenue opportunities for airlines while providing passengers with relevant information or offers. Overall, the sign contributes to a more organized, informative, and engaging travel experience for passengers.

According to an embodiment a fixed connector on bonded rail, configured to close the wiring scheme in an end portion is provided.

The "fixed connector on bonded rail" aspect indicates that this connector may be configured with male pins or plugs, which are intended to fit into corresponding female sockets or receptacles. These pins or terminals establish electrical connections when inserted into the female part of the connector.

The connector may be referred to as a "dummy" connector not because it lacks functionality, but because it serves as the final termination point for the wiring scheme. It acts as a closing point, ensuring that the electrical circuit is properly connected and allowing for the transmission of power, data, or signals throughout the system.

Additionally, this connector may have the capability to close the shielding network, providing necessary electromagnetic interference (EMI) protection. Furthermore, it can potentially serve as an expansion point for the PSU chain. For example, if an additional lining module, such as a small 1-bay lining, is added to the configuration, a PSU installed within that module can be connected to this "dummy" connector to extend the PSU chain further.

According to an embodiment the unit flexible connector comprises a length of at least 36 cm (or 14 in).

According to the invention, a wiring system for an aircraft includes numerous modular passenger service units is provided. Additionally, the system comprises multiple passenger supply channel portions of a lining module, each equipped with a lining stationary connector and a lining flexible connector.

The wiring system is configured to facilitate a daisy chain integration within the aircraft's wiring scheme, wherein multiple modular passenger service units are interconnected in sequence. This integration streamlines the wiring process and enhances the efficiency and reliability of the aircraft's electrical system.

By utilizing the lining stationary connectors and lining flexible connectors, the wiring system enables seamless connection between the modular passenger service units and the passenger supply channel portions of the lining module. This ensures a standardized and consistent wiring configuration throughout the aircraft cabin, contributing to simplified installation, reduced maintenance efforts, and improved overall performance.

Overall, the wiring system provides a robust and efficient solution for integrating modular passenger service units into the aircraft's electrical system, enhancing functionality, flexibility, and reliability during flight.

According to an embodiment of the wiring system the passenger supply channel portion further comprises an oxygen container, which includes a fixed oxygen connector configured to be connected to the loose oxygen connector of the modular passenger service unit.

This configuration allows for the seamless integration of oxygen distribution within the aircraft cabin. The fixed oxygen connector in the oxygen container provides a stable connection point, while the loose oxygen connector on the modular passenger service unit offers flexibility and adaptability during installation.

By connecting the oxygen container to the modular passenger service unit, the aircraft's oxygen distribution system is effectively integrated into the overall wiring scheme, ensuring reliable and efficient delivery of oxygen to passengers and crew as needed.

Overall, this embodiment enhances safety measures within the aircraft cabin by providing a streamlined and reliable oxygen distribution system that is seamlessly integrated with the modular passenger service units.

According to an embodiment the passenger supply channel comprises a metallic rail.

The inclusion of a metallic rail in the passenger supply channel enhances the structural integrity and durability of the wiring system within the aircraft cabin. The metallic material provides strength and stability, ensuring that the passenger supply channel supports the weight of the modular passenger service units and other components securely.

Overall, the use of a metallic rail in the passenger supply channel improves the robustness and functionality of the wiring system, enhancing safety, reliability, and performance during flight.

According to the invention an aircraft comprises a wiring system as described. The wiring system for an aircraft includes numerous modular passenger service units. Additionally, the system comprises multiple passenger supply channel portions of a lining module, each equipped with a lining stationary connector and a lining flexible connector.

This integrated wiring system streamlines the installation and operation of various onboard systems and amenities within the aircraft cabin. The modular passenger service units provide versatile functionality, while the passenger supply channel portions of the lining module offer standardized connectivity and support.

By utilizing the lining stationary connectors and lining flexible connectors, the wiring system enables seamless integration between the modular passenger service units and the lining module. This facilitates efficient wiring and connectivity throughout the aircraft cabin, enhancing overall functionality, reliability, and passenger experience during flight.

Overall, the wiring system represents an innovative approach to aircraft interior design, optimizing space utilization, simplifying installation and maintenance, and improving the overall efficiency and comfort of the aircraft cabin.

The configuration of the aircraft wiring system also allows for the utilization of propagation delay to determine the precise location of a module within the aircraft. Propagation delay refers to the time it takes for a signal to travel from one point to another. In the context of the aircraft wiring system, this delay can be influenced by factors such as the length and configuration of the wiring connections.

By accurately measuring the propagation delay of signals sent and received by the modular passenger service units, it becomes feasible to infer the specific position of each module relative to a central reference point within the aircraft. This information could be leveraged to streamline various processes such as installation, maintenance, and troubleshooting.

For instance, if a signal sent from the central control system to a particular modular passenger service unit experiences a longer propagation delay compared to signals sent to other units, it may indicate that the unit is located farther away from the central control system. Conversely, shorter propagation delays could suggest closer proximity to the central control system.

Harnessing propagation delay in this manner enables precise localization of modular passenger service units within the aircraft cabin. This capability not only enhances operational efficiency but also contributes to optimizing the layout and configuration of modules for improved passenger experience and overall cabin functionality.

Several notable advantages over conventional wiring systems are provided:
Streamlined Installation: The modular design and flexible connectors reduce labor and time efforts during assembly, improving efficiency in aircraft manufacturing.
Standardized Wiring: The daisy chain integration method promotes standardized wiring configurations, facilitating production planning and reducing lead times.
Enhanced Flexibility: The modular passenger service unit allows for easy reconfiguration and customization, adapting to different aircraft layouts and preferences without sacrificing standardization.
Cost Reduction: By simplifying production processes and reducing complexity, the invention contributes to overall cost-effectiveness in aircraft interior design and manufacturing.

The combination of unit fixed and unit flexible connectors, coupled with the implementation of a daisy chain integration method, represents a significant departure from conventional wiring systems in aircraft interiors. This approach offers a standardized, efficient, and adaptable solution for wiring overhead stowage compartments and other cabin amenities, addressing longstanding challenges in aircraft interior design and manufacturing.

### Brief description of the figures

Fig. 1 shows a detailed view of a modular passenger service unit demonstrating the wiring and connector principle;
Fig. 2 shows a detailed view of a wiring system in a pre-installed state without modular passenger service units;
Fig. 3 shows a detailed view of the wiring system according to Fig. 2 in a fully installed state;
Fig. 4 shows a detailed view of the wiring system according to Fig. 3 with one empty zone; and
Fig. 5 shows an aircraft comprising the modular passenger service unit.

### Detailed description

The illustrations in the figures are schematic and not to scale. If the same reference signs are used in different figures in the following description of the figures, they designate identical or similar elements. However, identical or similar elements can also be designated by different reference symbols.

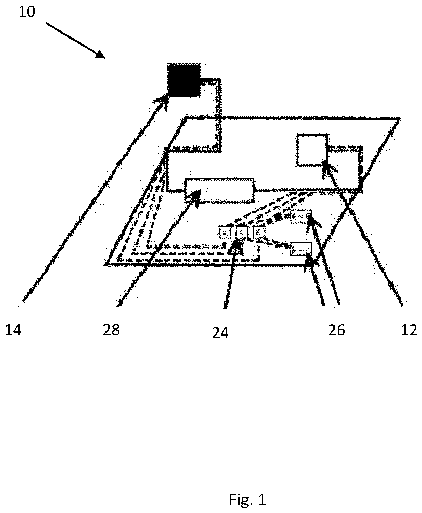

Fig. 1 shows a detailed view detailed view of a modular passenger service unit 10 demonstrating the wiring and connector principle. The modular passenger service unit 10 comprises two fundamental components. A unit stationary connector 12 and a unit flexible connector 14. Notably, the unit flexible connector 14 distinguishes itself by its flexible length, strategically configured to enable adaptable installation of the modular passenger service unit 10 within the aircraft cabin.

Central to the functionality of the modular passenger service unit 10 are its connectors, both the unit stationary connector 12 and the unit flexible connector 14. These connectors are configured to establish secure and reliable connections with an associated passenger supply channel portion 16 of a lining module 18. Typically configured as an overhead stowage compartment (OHSC) within the aircraft cabin, this lining module 18 serves as the structural backbone for the integration of the modular passenger service unit 10. The connections are facilitated through corresponding lining stationary connector 20 and lining flexible connector 22, providing flexible lengths to accommodate variations in the cabin's layout and configuration.

Beyond its structural components, the modular passenger service unit 10 is ingeniously configured to support daisy chain integration within the aircraft's wiring scheme. This integration method involves seamlessly connecting multiple modular passenger service units 10 together in sequence, thereby optimizing the aircraft's overall wiring configuration and enhancing operational efficiency.

In addition to its connectors, the modular passenger service unit 10 incorporates essential features to enhance its functionality and utility within the aircraft cabin. These include oxygen distributor pins 24, integrated to facilitate oxygen distribution within the cabin environment. Furthermore, the modular passenger service unit 10 comprises a loose oxygen connector 26 equipped with a flexible length, further augmenting its adaptability and ease of installation.

In summary, the modular passenger service unit 10 shown in Fig. 1 offers flexibility, efficiency, and seamless integration within the complex ecosystem of an aircraft cabin.

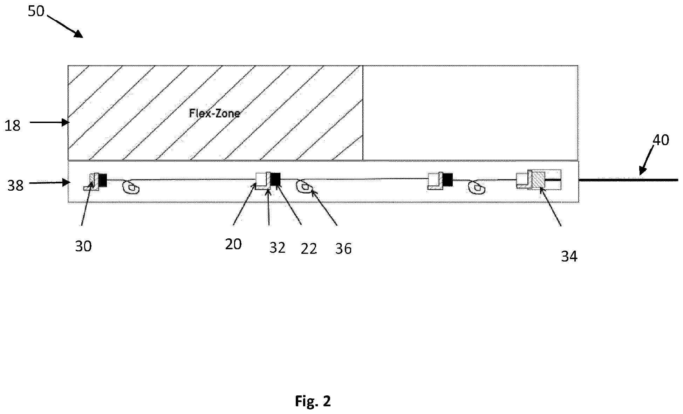

Fig. 2 shows a detailed view of a wiring system 50 in a pre-installed state. In the pre-installed state, the wiring system 50 is arranged and neatly organized within the aircraft cabin. Multiple modular passenger service units 10 (not shown) may be positioned along the designated supply channel portions 16 of the lining module 18. Each passenger service units 10 can be precisely aligned with its corresponding connectors, ready for seamless integration into the aircraft's electrical system.

The unit stationary connectors 12 of the modular passenger service units 10 may be securely fastened to the lining stationary connectors 20, ensuring stable and reliable electrical connections. Simultaneously, the unit flexible connectors 14, with their flexible lengths, are poised for adaptable installation, allowing for optimal positioning of the passenger service units 10 within the cabin layout.

In addition, a central connector 34 is provided to coordinate and regulate the flow of electrical signals within the system. Spare wiring 36 is also provided to accommodate any additional connections or future modifications as needed.

The wiring system is supported by a rail 38 structure, providing structural stability and facilitating the orderly arrangement of components. Furthermore, A/C electric 40 components are integrated into the system to ensure efficient operation and control of air conditioning systems within the aircraft cabin.

In summary, the pre-installed wiring system exemplifies precision engineering and meticulous planning, setting the stage for seamless integration and optimized functionality within the aircraft cabin.

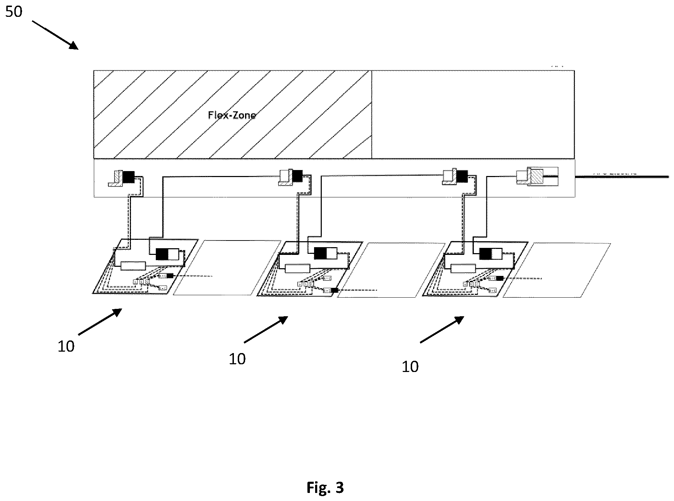

Fig. 3 shows a detailed view of a wiring system 50 according to Fig. 2 in a fully installed state. In a fully installed state, the wiring system 50 exhibits a arranged configuration, showcasing seamless integration and connectivity of three modular passenger service units 10.

The modular passenger service units 10 are equidistant positioned along the designated supply channel portions 16 of the lining module 18. Each modular passenger service units 10 is connected to the wiring system 50 via its unit stationary connector, establishing secure and reliable electrical connections with corresponding lining stationary connectors.

Furthermore, the unit flexible connectors of the modular passenger service units 10, characterized by their flexible lengths, are adeptly installed to accommodate the dynamic layout of the cabin environment. This adaptable installation ensures optimal positioning of the modular passenger service units 10 while maintaining efficient wiring arrangements throughout the system.

The wiring scheme follows a streamlined daisy chain integration method, facilitating sequential interconnection of the modular passenger service units 10 along the supply channel. This approach minimizes wiring complexities and optimizes space utilization within the cabin, enhancing overall operational efficiency.

In addition to the modular passenger service unit 10 connections, other key components of the wiring system 50, such as oxygen distributor pins and loose oxygen connectors, are seamlessly integrated to support essential functionalities within the cabin environment.

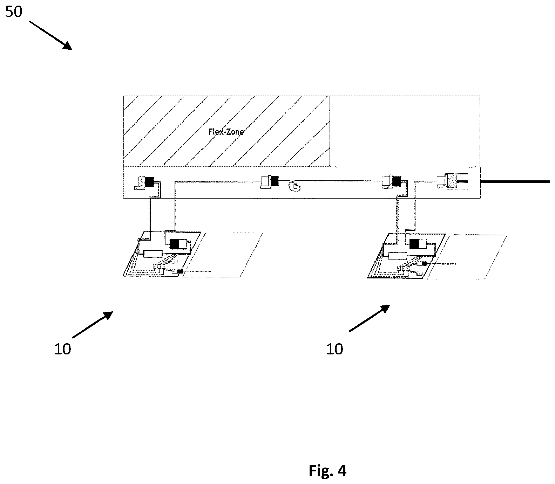

Fig. 4 shows a detailed view of the wiring system 50 according to Fig. 3 with one empty zone. In the shown state, there is an empty zone where one modular passenger service unit 10 is absent, and spare wiring 36 is utilized. Two modular passenger service units are connected and positioned along the supply channel portions 16 of the lining module 18.

The wiring configuration demonstrates a streamlined and organized layout, with cables neatly routed along the metallic rail 38 of the passenger supply channel. This arrangement ensures efficient transmission of power, data, and signals between the modular passenger service units and other components within the aircraft cabin, regardless of the empty zone.

Furthermore, the utilization of propagation delay technology allows for accurate determination of the exact positions of modular passenger service units 10 throughout the aircraft cabin. This feature enhances operational effectiveness and aids in refining the arrangement and setup of modules to enhance passenger satisfaction and overall cabin performance.

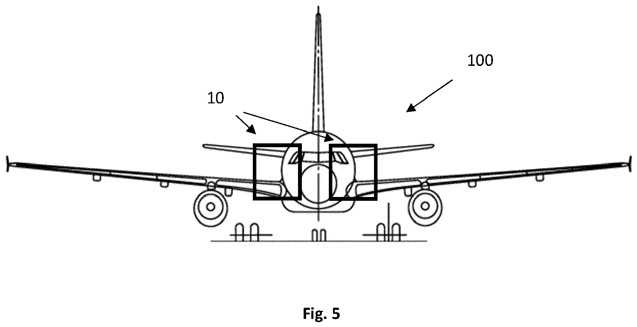

Fig. 5 shows an aircraft 100 comprising the modular passenger service unit 10.

### Reference Signs

- 10: modular passenger service unit
- 12: unit stationary connector
- 14: unit flexible connector
- 16: supply channel portion
- 18: lining module
- 20: lining stationary connector
- 22: lining flexible connector
- 24: oxygen distributor pins
- 26: loose oxygen connector
- 28: control board
- 30: fixed connector on bonded rail
- 32: click-and-snap connection mechanism
- 34: central connector
- 36: spare wiring
- 38: rail
- 40: A/C electric
- 50: wiring system

## Claims

1. A modular passenger service unit (10) for an aircraft (100), comprising:
a unit stationary connector (12); and
a unit flexible connector (14), comprising a flexible length for adaptable installation of the modular passenger service unit (10),
wherein the unit stationary connector (12) and the unit flexible connector (14) are configured to be connectable to an associated passenger supply channel portion (16) of a lining module (18), preferably an overhead stowage compartment (OHSC), via an associated lining stationary connector (20) and a lining flexible connector (22) comprising a flexible length,
wherein the modular passenger service unit (12) is configured to facilitate a daisy chain integration in a wiring scheme of the aircraft in which multiple modular passenger service units (10) are wired together in sequence.

2. The modular passenger service unit (10) according to one claim 1,
wherein the unit stationary connector (14), the unit flexible connector (12), the lining stationary connector (20) and the lining flexible connector (22) each comprise a corresponding click-and-snap connection mechanism (32).

3. The modular passenger service unit (10) according to claim 2, wherein the click-and-snap connection mechanism (32) is metallic to provide a shielding.

4. The modular passenger service unit (10) according to claim 1,
further comprising oxygen distributor pins (24).

5. The modular passenger service unit (10) according to claim 1,
further comprising a loose oxygen connector (26) comprising a flexible length.

6. The modular passenger service unit (10) according to claim 1,
further comprising a control board (28), wherein the control board (28) is configured to control the modular passenger service unit (10)

7. The modular passenger service unit (10) according to one of the preceding claims,
further comprising loudspeakers and/or lights.

8. The modular passenger service unit (10) according to one of the preceding claims,
further comprising in-flight entertainment systems, including screens for with and without IFE content.

9. The modular passenger service unit (10) according to one of the preceding claims,
further comprising a passenger call button, configured to allow a passenger to communicate with a flight attendant.

10. The modular passenger service unit (10) according to one of the preceding claims,
further comprising a fixed connector on bonded rail (30), configured to close the wiring scheme of the aircraft (100) in an end portion.

11. The modular passenger service unit (10) according to one of the preceding claims,
wherein the unit flexible connector (14) comprises a length of at least 36 cm.

12. A wiring system (50) for an aircraft (100), comprising a multitude of modular passenger service units (10) according to claim 1 to 11,
wherein the system (50) further comprises:
a multitude of passenger supply channel portions (16) of a lining module (18), preferably an overhead stowage compartment, each comprising a lining stationary connector (20) and a lining flexible connector (22),
wherein the wiring system (50) is configured to facilitate a daisy chain integration in a wiring scheme of the aircraft (100) in which multiple modular passenger service units (10) are wired together in sequence.

13. The wiring system (50) according to claim 12,
wherein the passenger supply channel portion further comprises an oxygen container including a fixed oxygen connector configured to be connected to a loose oxygen connector of the modular passenger service unit (10).

14. The wiring system (50) according to claim 12 or 13,
wherein the passenger supply channel comprises a, preferably metallic, rail (38).

15. An aircraft (100) comprising a modular passenger service unit (10) according to claim 1 to 13.
